# EUROPEAN PATENT SPECIFICATION

(11) **EP 3 083 286 B1**
(45) Date of publication and mention of the grant of the patent: **07.02.2018**
(21) Application number: 14812474.6
(22) Date of filing: 15.12.2014
(51) Int. Cl.: B60C 11/12

(54) **TREAD BAND COMPRISING CURVED BLOCKS WITH SIPES**
REIFENLAUFFLÄCHE MIT FEINEINSCHNITTEN IN DEN PROFILBLÖCKEN
BANDE DE ROULEMENT COMPRENANT DES PAVÉS CURVES AVEC DES LAMELLES

(30) Priority: 17.12.2013 FR 1362804
(43) Date of publication of application: 26.10.2016
(73) Proprietor: Compagnie Générale des Etablissements Michelin, 63000 Clermont-Ferrand (FR)
(72) Inventor: KANEKO, Shuichi, Tokyo 163-1073 (JP)
(74) Representative: Demaure, Pierre-Yves
(86) International application number: PCT/EP2014/077716
(87) International publication number: WO 2015/091333

(56) References cited:
- FR-A1- 2 763 892
- US-A- 3 570 571
- US-A- 4 057 089
- US-A1- 2003 205 305
- US-A1- 2007 017 618
- US-A1- 2011 168 311
- US-A1- 2011 259 487
- US-B1- 6 892 775

## Description

### FIELD OF THE INVENTION

The present invention relates to a pneumatic tyre suitable for ice-bound or snow covered roads, and more particularly to a pneumatic tyre for ice-bound or snow covered roads, in which the tread band of the pneumatic tyre comprises a plurality of curved blocks.

### PRIOR ART

Document US4057089 discloses a pneumatic tyre comprising a tread band. The tread band has a plurality of blocks. Each block extends continuously in a curved manner to one side of the tread band towards the centre of this tread band. More particularly, the blocks are curved along structural curvature of a parabola of the second order. In the tread band of the document US4057089, the curved blocks are linked to a central strip. Indeed, the curved blocks are quite large. Thus, the rigidity of the curved blocks is important, and consequently the wear of the tread band is also important.

Document US 2003/0205305 - A discloses a tread band for a tyre, said tread band (1) comprising two sides with a predetermined distance between these two sides and a centre, said tread band having a plurality of blocks (5), each block extending in a curved manner from one side of the tread band towards the centre of this tread band, the block following a certain curvature, wherein all or part of the blocks of the plurality of blocks (5) comprise a main sipe (6) extending in the block (5) and following the same curvature, this sipe (6) separating the block in two parts.

Also documents US 6892775 - B, US 2007/0017618 - A and FR 2763892 - A individually disclose the same combination of features.

It is an object of the present invention to improve the durability of a tread band comprising a plurality of curved blocks.

### DEFINITIONS

"Tyre" is understood as any type of elastic tyre whether it is subjected to an internal pressure or not.

"Tread" of a tyre is understood as a quantity of rubber material defined by lateral surfaces and by two principal surfaces, one thereof being designed to come into contact with a road surface when the tyre is travelling.

"Block" is understood as relief element limited by some grooves. Each block comprises a plurality of lateral faces and a contact face which is able to come into contact with the road when the tyre is rolling.

"Side of the tread band" is understood as the place in the pneumatic tyre where a transition of the tread band with a side of the pneumatic tyre occurs.

"Groove" is understood as a cut-out, the material faces thereof not coming into contact in normal travelling conditions. Generally, the width of a groove is greater than or equal to 2 mm.

"Sipe" is understood as a cut-out, the material faces thereof coming into contact during normal travelling conditions. Generally, the width of a sipe is less than 2 mm.

### SUMMARY OF THE INVENTION

The invention relates to a tread band for a tyre, as defined in claim 1, said tread band comprising two sides with a predetermined distance D between these two sides and a centre. The tread band comprises a plurality of blocks. Each block extending continuously in a curved manner to one side of the tread band towards the centre of this tread band with no groove separating this block in different parts, the block following a certain curvature C. All or part of the blocks of the plurality of blocks comprises a main sipe extending in the block and following the same curvature C, this sipe separating the bloc in two ½ parts.

The main sipe makes the rigidity of the curved block decreasing. Consequently, the wear of the curved block is also decreasing too. Indeed, as the main sipe separates the curved block in two ½ parts, the rigidity of the two parts is globally the same, making the wear of the block uniform.

Preferred embodiments of the tread according to the invention are defined in the dependent claims.

In a variant, the block comprises a plurality of secondary sipes, each secondary sipe extending perpendicularly to the main sipe.

The rigidity of the curved block is decreasing.

In a variant, the pitch between the plurality of secondary sipes is globally equal along the main sipe.

The uniformity in the wear of the block is improved.

In a variant, each block having lateral walls, or the secondary sipes do not extend until one of the lateral walls of the block.

We avoid the propagation of cracks inside the block.

In a variant, the main sipe having a depth of main sipe and the secondary sipes having the depth of secondary sipes, the depth of the secondary sipes is different than the depth of the main sipe.

Thus it is possible to adjust more precisely the rigidity in the block.

### BRIEF DESCRIPTION OF THE DRAWINGS

Other features and advantages of the invention will emerge from the following description, given by way of non limiting example, with reference to the attached drawings in which:
- **Figure 1** schematically depicts a part of a tread band according to the invention;
- **Figure 2** schematically depicts a block of the tread band of **Figure 1** according to a second embodiment of the invention.

In the description that follows, elements that are substantially identical or similar will be denoted by identical references.

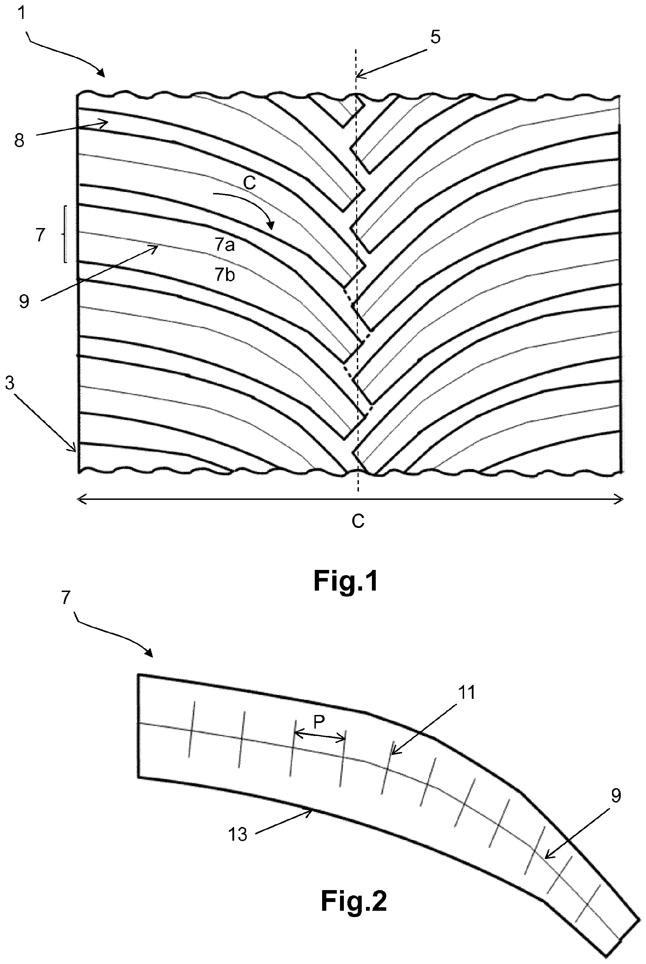

**Figure 1** depicts a tread band 1 made of rubberlike material for a tyre. The tread band 1 comprises two sides 3 and centre 5. The distance D between the two sides 3 of the tread band is disclosed by the European Tyre and Rim Technical Organisation (ETRTO). The ETRO defines this distance D such as D=(1.075-0.005ar) *S^{1.001}, where ar is the Nominal aspect ratio and S is the Design Section Width on Measuring Rim. The tread band has a plurality of blocks 7 defined by main grooves 8. Each block 7 extends continuously in a curved manner to one side 3 of tread band towards the centre 5, the block following a certain curvature C. By "continuously", it is understood that no secondary groove opening into the main grooves 8 separate the block in different parts. With no secondary groove opening into the main grooves, the evacuation of the water outside this tread band, via the main grooves 8, is not disturbed. By "towards the centre", it is understood that the block stops at the level of the centre, or just before the centre or just after the centre. The centre means a line extending in a circumferential direction and dividing the tread band in two equally part of the tread bands.

More particularly, all the blocks 7 comprise a main sipe 9 extending in the block and following the same curvature C. The sipe 9 separates the block in two ½ parts 7a, 7b, this two ½ parts 7a, 7b being globally the same.

**Figure 2** schematically depicts a block of the tread band of **Figure 1** according to a second embodiment of the invention. In this embodiment, the block 7 comprises a plurality of secondary sipes 11. Each secondary sipe extends perpendicularly to the main sipe. The depth of the secondary sipes is globally equal to the depth of the main sipe. In a variant, the depth of the secondary sipes is different than the depth of the main sipe. For example, the depth of the secondary sipes is lower than the depth of the main sipe. All the combinations of depth between the main sipe and the secondary sipes are possible.

Indeed, the pitch P between the secondary sipes is globally equal along the main sipe.

In addition, the secondary sipes do not extend until one of the lateral walls of the block 7.

The invention is not restricted to the examples described and depicted and various modifications can be made thereto without departing from its scope.

## Claims

1. Tread band for a tyre, said tread band (1) comprising two sides (3) with a predetermined distance D between these two sides (3) and a centre (5), said tread band having a plurality of blocks (7), each block extending continuously in a curved manner to one side (3) of the tread band towards the centre (5) of this tread band with no groove separating the block in different parts, the block following a certain curvature C wherein all or part of the blocks of the plurality of blocks comprise a main sipe (9) extending in the block (7) and following the same curvature C, this sipe separating the block in two ½ parts (7a, 7b).

2. Tread band according to claim 1, **characterized in that** the block (7) comprises a plurality of secondary sipes (11), each secondary sipe (11) extending perpendicularly to the main sipe (9).

3. Tread band according to claim 2, the pitch (P) between the plurality of secondary sipes (11) is globally equal along the main sipe (9).

4. Tread band according to any one of Claims 2 or 3, in which each block (7) has lateral walls (13), **characterized in that** the secondary sipes (11) do not extend until one of the lateral walls (13) of the block (7) .

5. Tread band according to any one of Claims 2 to 4, in which the main sipe has a depth of main sipe and the secondary sipes have the depth of secondary sipes, **characterized in that** the depth of the secondary sipes is different than the depth of the main sipe.

## Patentansprüche

1. Laufstreifen für einen Reifen, wobei der Laufstreifen (1) zwei Seiten (3) mit einem vorbestimmten Abstand D zwischen diesen beiden Seiten (3) und eine Mitte (5) umfasst, wobei der Laufstreifen mehrere Blöcke (7) aufweist, wobei sich jeder Block durchgängig gekrümmt zu einer Seite (3) des Laufstreifens zur Mitte (5) dieses Laufstreifens hin ohne eine den Block in verschiedene Teile unterteilende Rille erstreckt, wobei der Block einer gewissen Krümmung C folgt, wobei alle oder ein Teil der Blöcke der mehreren Blöcke eine Hauptlamelle (9) umfassen, die sich in dem Block (7) erstreckt und derselben Krümmung C folgt, wobei diese Lamelle den Block in zwei 1/2-Teile (7a, 7b) unterteilt.

2. Laufstreifen nach Anspruch 1, **dadurch gekennzeichnet, dass** der Block (7) mehrere sekundäre Lamellen (11) umfasst, wobei sich jede sekundäre Lamelle (11) senkrecht zur Hauptlamelle (9) erstreckt.

3. Laufstreifen nach Anspruch 2, wobei der Abstand (P) zwischen den mehreren sekundären Lamellen (11) entlang der Hauptlamelle (9) insgesamt gleich ist.

4. Laufstreifen nach einem der Ansprüche 2 oder 3, bei dem jeder Block (7) Seitenwände (13) aufweist,
**dadurch gekennzeichnet, dass** sich die sekundären Lamellen (11) nicht bis zu einer der Seitenwände (13) des Blocks (7) erstrecken.

5. Laufstreifen nach einem der Ansprüche 2-4, bei dem die Hauptlamelle eine Hauptlamellentiefe aufweist und die sekundären Lamellen eine Sekundärlamellentiefe aufweisen,
**dadurch gekennzeichnet, dass** sich die Tiefe der sekundären Lamellen von der Tiefe der Hauptlamelle unterscheidet.

## Revendications

1. Bande de roulement pour pneu, ladite bande de roulement (1) comprenant deux côtés (3) avec une distance D prédéterminée entre ces deux côtés (3) et un centre (5), ladite bande de roulement comportant une pluralité de pavés (7), chaque pavé s'étendant en continu de manière courbe d'un côté (3) de la bande de roulement vers le centre (5) de cette bande de roulement avec aucune rainure séparant le pavé en parties différentes, le pavé suivant une certaine courbure C, tout ou partie des pavés de la pluralité de pavés comprenant une lamelle principale (9) s'étendant dans le pavé (7) et suivant la même courbure C, cette lamelle séparant le pavé en deux moitiés (7a, 7b).

2. Bande de roulement selon la revendication 1, **caractérisée en ce que** le pavé (7) comprend une pluralité de lamelles secondaires (11), chaque lamelle secondaire (11) s'étendant perpendiculairement à la lamelle principale (9).

3. Bande de roulement selon la revendication 2, dans laquelle l'espacement (P) entre la pluralité de lamelles secondaires (11) est globalement le même tout le long de la lamelle principale (9).

4. Bande de roulement selon l'une quelconque des revendications 2 ou 3, dans laquelle chaque pavé (7) comporte des parois latérales (13), **caractérisée en ce que** les lamelles secondaires (11) ne s'étendent pas jusqu'à l'une des parois latérales (13) du pavé (7).

5. Bande de roulement selon l'une quelconque des revendications 2 à 4, dans laquelle la lamelle principale a une profondeur de lamelle principale et les lamelles secondaires ont une profondeur de lamelle secondaire, **caractérisée en ce que** la profondeur des lamelles secondaires est différente de la profondeur de la lamelle principale.
